(19) Europäisches Patentamt
European Patent Office
Office européen des brevets

(11) **EP 2 153 200 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **08759845.4**

(22) Anmeldetag: **21.05.2008**

(51) Int Cl.:
***G01N 15/02*** *(2006.01)*      ***G01N 3/56*** *(2006.01)*

(86) Internationale Anmeldenummer:
**PCT/EP2008/056243**

(87) Internationale Veröffentlichungsnummer:
**WO 2008/148644 (11.12.2008 Gazette 2008/50)**

(54) **VORRICHTUNG UND VERFAHREN ZUR BESTIMMUNG DES TRANSPORTVERHALTENS BEI PNEUMATISCHER FÖRDERUNG VON GRANULATEN**

DEVICE AND METHOD FOR DETERMINING THE TRANSPORT BEHAVIOR DURING THE PNEUMATIC CONVEYANCE OF GRANULES

DISPOSITIF ET PROCÉDÉ POUR DÉTERMINER LE COMPORTEMENT DE TRANSPORT LORS DU TRANSPORT PNEUMATIQUE DE GRANULÉS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.06.2007 DE 102007025928**

(43) Veröffentlichungstag der Anmeldung:
**17.02.2010 Patentblatt 2010/07**

(73) Patentinhaber: **Evonik Carbon Black GmbH**
**63457 Hanau (DE)**

(72) Erfinder:
 • **STENGER, Frank**
  **63755 Alzenau (DE)**
 • **KARL, Alfons**
  **63584 Gründau (DE)**
 • **MATHIAS, Johann**
  **63796 Kahl (DE)**
 • **RIEDEMANN, Thomas**
  **63776 Mömbris (DE)**
 • **SCHARFFENBERG-KAHLKE, Rudolf**
  **53879 Euskirchen (DE)**
 • **ALDENHÖVEL, Karsten**
  **84508 Burgkirchen (DE)**

(74) Vertreter: **polypatent BGL**
**Braunsberger Feld 29**
**51429 Bergisch Gladbach (DE)**

(56) Entgegenhaltungen:
**EP-A- 0 178 120     EP-A- 0 943 913**
**US-A- 5 816 509**

 • **P. KÄFERSTEIN ET AL: "ANLAGE ZUM SCHLUSSBERICHT DES AIF-PROJECTED, ZERFALLSVERHALTEN VON PARTIKELN IN WIRBELSCHICHTEN, FORSCHUNGSVORHABEN-NR.:11151 B" 4. August 1999 (1999-08-04), , MAGDEBURG , XP008095548 Seite 12 - Seite 25**

**Beschreibung**

Die Erfindung betrifft eine Vorrichtung und ein Verfahren zur Bestimmung des Transportverhaltens bei der pneumatischen Förderung von Granulaten.

Bei der pneumatischen Förderung von Granulaten können Granulatbruch und Granulatabrieb auftreten [Pahl, M.H., Lagern, Fördern und Dosieren von Schüttgütern, Verlag TÜV Rheinland, Köln, 1989, S. 175 - 176].

Es ist bekannt, dass das Abriebverhalten von Granulaten mittels Siebbeanspruchung beziehungsweise der Messung der Einzelperlhärte bestimmt werden kann [Ferch, H., Schriftenreihe Pigmente - Die Handhabung industriell erzeugter Ruße, Degussa Schriftenreihe, Frankfurt, 1987, S. 74 - 75].

Diese Bestimmungsmethoden haben den Nachteil, dass sie teilweise schlecht mit Messergebnissen nach der pneumatischen Förderung in der Produktion korrelieren.

Ferner ist bekannt, dass das Zerfallsverhalten von Partikeln in industriellen Prozessen, beispielsweise in der Wirbelschicht, in einer Laborförderapparatur simuliert werden kann [Käferstein P., Mörl L., Dalichau J., Behns W., Anlage zum Schlussbericht des AiF-Projektes "Zerfallsverhalten von Partikeln in Wirbelschichten", Forschungsvorhaben-Nr. 11151 B, Magdeburg, 1999, S. 17 - 21]. Diese Apparatur besteht aus einer Druckluftversorgungseinheit, einer Feststoffdosiereinheit, einer Förderstrecke, einem Partikelgeschwindigkeitsmessgerät, einem Laserbeugungsspektrometer sowie einer Absaug- und Staubabscheideeinheit. Dabei wird die zu vermessende Granulatprobe über einen Schwingförderer in den Trichter eines anschließenden Feststoffinjektors und so in einen Luftstrom mit definiertem Volumenstrom eingebracht. Das Granulat durchläuft die Förderstrecke und gelangt in senkrechter Strömung in die Messstrecke des Laserbeugungsspektrometers. In der nachgeschalteten Absaug - und Staubabscheideeinheit wird die beanspruchte Partikelprobe abgeschieden.

Diese bekannte Bestimmungsmethode hat den Nachteil, dass bereits bei der Granulataufgabe (Feststoffinjektor) Granulatabrieb und -bruch erzeugt wird, so dass eine gezielte Aussage zum Transportverhalten in der pneumatischen Förderstrecke nicht möglich beziehungsweise mit Fehlern behaftet ist. Ein weiterer Nachteil des bekannten Verfahrens besteht darin, dass zur Charakterisierung einer unbeanspruchten Granulatprobe eine externe Messtechnik hinzugezogen werden muss. Ein Vergleich der Partikelgrößenverteilung der unbeanspruchten und der beanspruchten Proben bildet hingegen die bekannte Grundlage für eine verlässliche Aussage über das Abriebsverhalten von Granulaten während der pneumatischen Förderung.

Das Dokument EP0943913 A offenbart die Verwendung eines Venturi-Injektors für die Partikelgrößenverteilungsmessung eines Pulvers. Die Dokumente US5816509 A und EP0178120 A offenbaren Venturi-Injektors für den Transport eines Pulvers.

Aufgabe der Erfindung ist es, ein Verfahren zur Bestimmung des Transportverhaltens bei der pneumatischen Förderung von Granulaten zur Verfügung zu stellen, bei dem eine zerstörungsfreie Granulataufgabe gewährleistet ist. Eine weitere Aufgabe der Erfindung ist es, eine zusätzliche Probenaufgabe und damit Messstelle zur Charakterisierung der unbeanspruchten Granulatprobe unter vergleichbaren Bedingungen bereitzustellen.

Gegenstand der Erfindung ist ein Verfahren zur Bestimmung des Transportverhaltens bei der pneumatischen Förderung von Granulaten indem man

(A) die Granulatprobe in eine Förderrinne aufgibt,

(B) die Granulatprobe nach der Förderrinne über einen Injektor in einen geregelten Luftstrom einbringt,

(C) die Granulatprobe eine Förderstrecke durchfließt und

(D) die Granulatprobe in einem Laserbeugungsspektrometer

vermißt,

welches dadurch gekennzeichnet ist, dass man in Schritt (B) die Granulatprobe über einen Venturi-Injektor einbringt.

Dabei kann die Probenaufgabe beim Venturi-Injektor an der engsten Stelle des Injektors erfolgen.

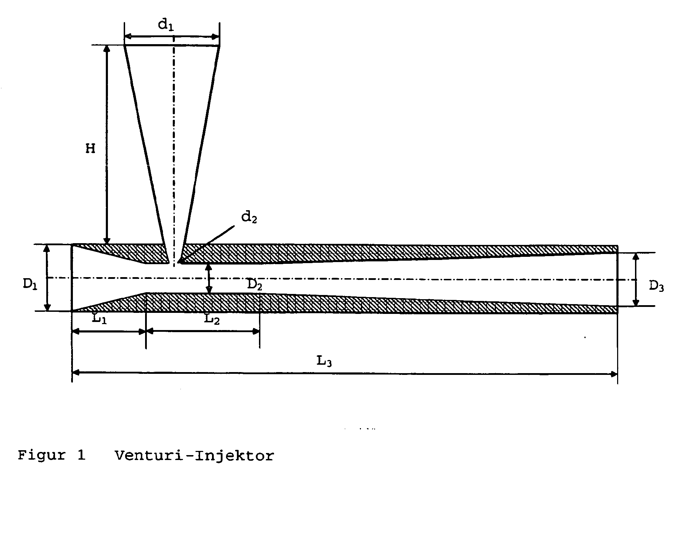

Der Venturi-Injektor kann einen Aufbau gemäß Figur 1 haben:

| | |
|---|---|
| $D_1$ | Rohrdurchmesser Einlauf, |
| $D_2$ | Rohrdurchmesser Venturi, |
| $D_3$ | Rohrdurchmesser Auslauf, |
| $d_1$ | Trichterdurchmesser Einlauf, |
| $d_2$ | Trichterdurchmesser Auslauf, |
| $H$ | Trichterhöhe, |

(fortgesetzt)

| $L_1$ | Länge Einlauf, |
| $L_2$ | Länge Venturi, |
| $L_3$ | Länge Auslauf. |

Dabei können die Rohrdurchmesser $D_1$ und $D_3$ Abmessungen zwischen 30 und 80 mm, vorzugsweise zwischen 40 und 50 mm, der Rohrdurchmesser $D_2$ Abmessungen zwischen 10 und 30 mm, vorzugsweise zwischen 18 und 23 mm, aufweisen. Das Verhältnis von $D_2/D_1$ beziehungsweise $D_2/D_3$ kann dabei zwischen 0,125 und 0,9, vorzugsweise zwischen 0,36 und 0,55, variieren. Die Länge des Einlaufs $L_1$ kann zwischen 30 und 80 mm, vorzugsweise zwischen 40 und 60 mm, die Venturilänge $L_2$ zwischen 30 und 100 mm, vorzugsweise zwischen 60 und 80 mm, sein. Das Verhältnis $L_1/L_2$ kann dabei Werte zwischen 0,3 und 2,6, vorzugsweise zwischen 0,5 und 1, annehmen. Die Gesamtlänge $L_3$ des Injektors kann zwischen 110 und 1000 mm, vorzugsweise zwischen 220 und 440 mm, sein. Die Abmessungen für den Trichter können für den Durchmesser $d_1$ zwischen 25 und 150 mm, vorzugsweise zwischen 70 und 100 mm, und für den Durchmesser $d_2$ zwischen 5 und 20 mm, vorzugsweise zwischen 8 und 15 mm, sein. Das Verhältnis $d_1/d_2$ kann dabei Werte zwischen 1,25 und 30, vorzugsweise zwischen 4,5 und 12,5, annehmen. Die Höhe H des Trichters kann zwischen 50 und 200 mm, vorzugsweise zwischen 100 und 150 mm, sein.

Der Venturi-Injektor kann aus bearbeitbaren Materialien wie Stähle und Kunststoffen, beispielsweise Edelstahl oder Plexiglas, hergestellt werden. Die äußeren und inneren Oberflächen des Injektors können behandelt, beispielsweise geschlichtet oder feingeschlichtet, sein.

Das Granulat kann Pigmente und Füllstoffe wie Ruße, beispielsweise Furnaceruß, Gasruß, Flammruß oder Thermalruß, Channelruß, Plasmaruß, Lichtbdgenruß, Acetylenruß, Inversionsruß, bekannt aus DE 19521565, Sihaltiger Ruß, bekannt aus WO 98/45361 oder DE 196113796, metallhaltiger Ruß, bekannt aus WO 98/42778, oder schwermetallhaltiger Ruß, wie er beispielsweise bei der Synthesegasproduktion als Nebenprodukt anfällt, Titandioxide, Kieselsäuren, beispielsweise gefällte oder pyrogene Kieselsäure, Carbonate, Borate, Kunststoffgranulate, beispielsweise Polymethylmethacrylat, Polyester, Polyacrylate, Polyamide oder Polyether, sowie Komposite und Mischungen der genannten Stoffe umfassen. Die aufgeführten Stoffe der Granulate können nachbehandelt oder oberflächenmodifiziert, beispielsweise oxidiert oder gecoatet, sein.

Die Granulate können ferner nass-, trocken-, öl- oder wachsgranuliert sein. Als Granulationsflüssigkeit können Wasser, Silane oder Kohlenwasserstoffe, beispielsweise Benzin oder Cyclohexan, mit oder ohne Zugabe von Bindemitteln, beispielsweise Melasse, Zucker, Ligninsulfonate sowie zahlreiche andere Stoffe alleine oder in Kombination miteinander, eingesetzt werden.

Das Granulat kann im Partikelgrößenbereich zwischen 0,1 $\mu$m und 5 mm, vorzugsweise zwischen 50 $\mu$m und 5 mm, vorliegen.

Die Förderstrecke kann Durchmesser zwischen 30 und 60 mm, vorzugsweise zwischen 40 und 50 mm, und Längen zwischen 500 und 3000 mm aufweisen. Als Förderstrecken können unterschiedliche Rohr-Geometrien, beispielsweise Krümmer, Schlaufen und Prallplatten sowie deren Kombination, eingesetzt werden. Die Förderstrecke kann aus bearbeitbaren Materialien wie Stähle und Kunststoffen, beispielsweise Edelstahl, Plexiglas oder Schlauchmaterialien, wie beispielsweise Polypropylen, hergestellt sein. Dabei können die inneren Oberflächen der Förderstrecke behandelt, beispielsweise geschichtet, poliert, sandgestrahlt oder beschichtet, sein.

Als Traggasstrom können unterschiedliche Gase, vorzugsweise Luft, eingesetzt werden. Der Traggasstrom kann mit unterschiedlichen Flüssigkeiten, beispielsweise Wasser, beladen sein. Der Traggasstrom kann mit Mengen von 0 bis 20 g Flüssigkeit/kg Luft beladen sein.

Die Temperatur des Traggasstromes kann zwischen 5 und 100 °C, vorzugsweise zwischen 20 und 40 °C, variieren. Die Volumenströme des Traggases können zwischen 5 und 600 $m^3$/h, vorzugsweise zwischen 10 und 400 $m^3$/h, variieren.

Das Laserbeugungsmessgerät kann mit einem optischen Linsensystem, einer Detektoranordnung und einer Laserkonfiguration derart ausgestattet sein, dass Partikelgrößenverteilungen im Größenbereich von 0,1 $\mu$m bis 5 mm detektiert werden können. Die Beugung des Laserlichts resultiert aus der Wechselwirkung des Lichts mit den Partikeln und lässt sich mathematisch mit der Fraunhofer - oder der Mie-Theorie beschreiben. Die Aufnahme der Intensitätsverteilung des an den Partikeln gebeugten Lichts geschieht gewöhnlich mit Hilfe eines Multielementphotodetektors. Um eine optimale Beleuchtung der Partikeln durch eine ebene Lichtwelle zu erzielen, werden zum Beispiel HeNe Laser mit einer Wellenlänge von 632,8 nm mit einem langen Resonator und einem räumlichen Filter in der Strahlaufweitungseinheit eingesetzt.

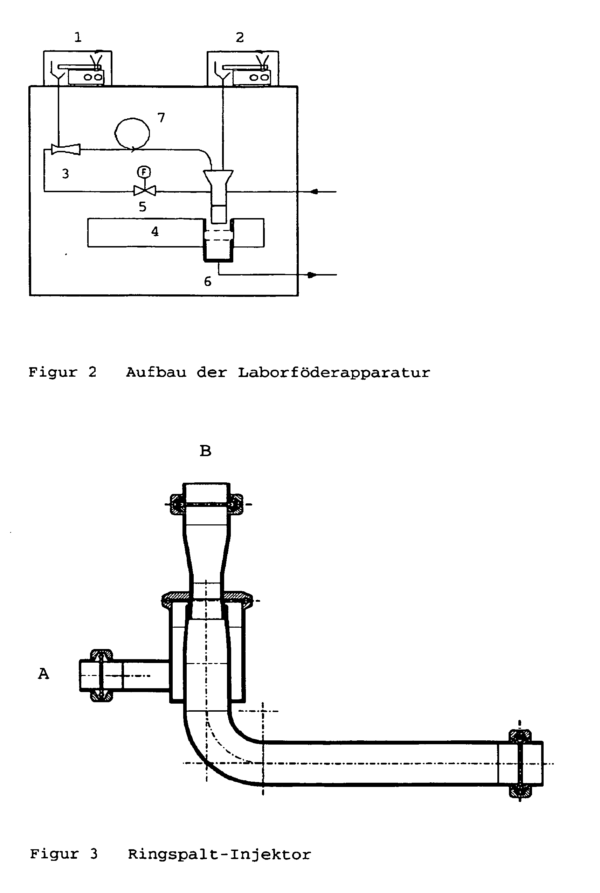

Figur 2 zeigt den Aufbau einer erfindungsgemäßen Laborförderapparatur:

1 Vibrationsrinne Belastungsstrecke,

2 Vibrationsrinne Referenzmessung,
3 Venturi-Injektor,
4 Laserbeugungsspektrometer,
5 Luftstromregelventil,
6 Abluftkasten,
7 Belastungsstrecke.

Ein weiterer Gegenstand der Erfindung ist eine Vorrichtung zur Bestimmung des Transportverhaltens bei pneumatischer Förderung von Granulaten enthaltend

- eine Förderrinne (1) zur Aufgabe von Granulaten in die Förderstrecke,

- eine Förderrinne (2) zur Aufgabe von unbeanspruchten Granulaten in das Laserbeugungsspektrometer,

- ein Luftstromregelventil (5),

- ein Venturi-Injektor (3),

- eine Förderstrecke (7), beispielsweise Schlaufe und oder Bogen, und

- ein Laserbeugungsspektrometer (4).

Die Vorrichtung kann an einen Abluftkasten angeschlossen sein. Die Vorrichtung kann von einer Schallschutzbox umgeben sein.

Das erfindungsgemäße Verfahren hat den Vorteil, dass die Probenaufgabe vor der Förderstrecke zerstörungsfrei ist. Das erfindungsgemäße Verfahren hat ferner den Vorteil, dass eine unbeanspruchte Granulatprobe im Laserbeugungsspektrometer charakterisiert werden kann.

Beispiele

Für die Beispiele wird ein Laserbeugungsspektrometer Sympatec HELOS/KF-Magic der Firma Sympatec verwendet.

Der in den Beispielen verwendete Venturi-Injektor ist aus Edelstahl, die Innenflächen sind feingeschlichtet und hat folgende Abmessungen: $d_1$=31mm, $d_2$=11mm, H=163mm, $D_1$=44mm, $D_2$=22mm, $D_3$=44mm, $L_3$=396mm, $L_1$=55mm, $L_2$=71mm.

Beispiel 1: Variation der Injektortypen

In dem folgenden Beispiel wird ein nassgeperlter Russtyp Purex HS 25 der Firma Degussa GmbH mit den in Tabelle 1 aufgeführten Eigenschaften eingesetzt.

Tabelle 1:

| Messgröße | Messwert | Bestimmungsmethode |
|-----------|----------|--------------------|
| CTAB | 28,2 m$^2$/g | ASTM 3765 |
| BET | 30,6 m$^2$/g | DIN 66131/2 |
| DBP | 123,5 ml/100 g | DIN 53601 |
| Q3,10 | 290 $\mu$m | ISO 133322-2 |
| Q3,50 | 849 $\mu$m | ISO 133322-2 |
| Q3,90 | 1762 $\mu$m | ISO 133322-2 |

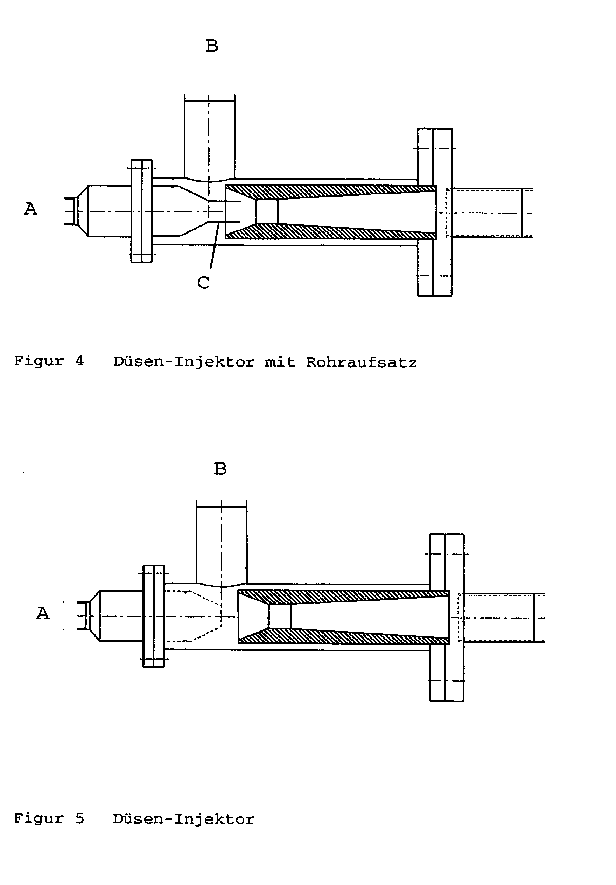

Jeweils 15 g eines nassgeperlten Rußes werden über die Förderinne und über unterschiedliche Injektoren (siehe Figuren 3, 4 und 5 mit A: Luftzufuhr, B: Granulatzufuhr, C: Rohr) in die Förderstrecke gebracht. Die Luftgeschwindigkeit im Förderrohr (Nenndurchmesser 44 mm) wird dabei auf 14 m/s eingestellt. Die Dosierleistung der Förderrinne wird so gewählt, dass sich eine Beladung von 150 g Ruß/kg Luft im Fördergasstrom einstellt. Als Förderstrecke wird eine Schlaufe mit einem 360°-Bogen und anschließendem Krümmer gemäß Figur 2 eingesetzt. Im nachgeschalteten Laserbeugungsspektrometer werden die resultierenden Intensitätsverteilungen gemessen, ausgewertet und in eine Partikelgrößenverteilung umgerechnet. Aus den Partikelgrößenverteilungen können die Massenanteile mit Partikelgrößen < 125 $\mu$m bestimmt werden. Dabei ergeben sich die in Tabelle 2 gemessenen Werte.

Tabelle 2:

| Injektor-Typ | Massenanteil < 125 $\mu$m |
|---|---|
| Ringspaltinjektor gemäß Figur 3 | 79,8 % |
| Düse + Rohr gemäß Figur4 | 48,1 % |
| Düse, 10,5 mm gemäß Figur 5 | 41,2 % |
| Venturi-Injektor gemäß Figur 1 | 37,0 % |

Der Massenanteil der Granulate mit einer Größe < 125 $\mu$m dient dabei als Maß für die Granulatzerstörung. Unter der Annahme gleicher Beanspruchung der Proben in der Beanspruchungsstrecke ist diese Größe zugleich ein Maß für die Beanspruchung der Proben im Injektor. Der Venturi-Injektor zeigt dabei die geringste Granulatzerstörung bei der Probenaufgabe.

Beispiel 2: Reproduzierbarkeit der Messungen

In dem folgenden Beispiel wird ein nassgeperlter Rußtyp Purex HS 25 der Firma Degussa GmbH mit den in der Tabelle 3 aufgeführten Eigenschaften eingesetzt.

Tabelle 3:

| Messgröße | Messwert | Bestimmungsmethode |
|---|---|---|
| CTAB | 28,2 m$^2$/g | ASTM 3765 |
| BET | 30,6 m$^2$/g | DIN 66131/2 |
| DBP | 123,5 ml/100 g | DIN 53601 |
| Q3,10 | 290 $\mu$m | ISO 133322-2 |
| Q3,50 | 849 $\mu$m | ISO 133322-2 |
| Q3,90 | 1762 $\mu$m | ISO 133322-2 |

Jeweils 15 g des Rußes werden über die Förderrinne und den Venturi-Injektor in die Förderstrecke gebracht. Die Luftgeschwindigkeit im Förderrohr (Nenndurchmesser 44 mm) wird dabei auf 10, 12, 14 und 16 m/s eingestellt. Die Dosierleistung der Förderrinne wird so gewählt, dass sich eine Beladung von 27 g Ruß/kg Luft einstellt. Als Förderstrecke wird eine Schlaufe mit einem 360°-Bogen und anschließendem Krümmer gemäß Figur 2 eingesetzt. Im nachgeschalteten Laserbeugungsspektrometer werden aus den Partikelgrößenverteilungen die Massenanteile mit Partikelgrößen < 125 $\mu$m bestimmt. Jede Messung wird dreimal wiederholt und die Standardabweichung nach folgender Formel

$$\sigma = \sqrt{\frac{n\left(\sum x^2\right) - \left(\sum x\right)^2}{n(n-1)}}$$

bestimmt. Dabei werden die in Tabelle 4 aufgeführten Ergebnisse erhalten.

Tabelle 4:

| Luftgeschwindigkeit | Massenanteil < 125 $\mu$m | Standardabweichung $\sigma$ |
|---|---|---|
| 10 m/s | 14,8 % | |
| | 14,1 % | |
| | 16,0 % | 0, 96 |

(fortgesetzt)

| Luftgeschwindigkeit | Massenanteil < 125 $\mu$m | Standardabweichung $\sigma$ |
|---|---|---|
| 12 m/s | 24,7 % | |
| | 25,0 % | |
| | 25,6 % | 0,46 |
| 14 m/s | 36,3 % | |
| | 37,0 % | |
| | 37,1 % | 0,44 |
| 16 m/s | 50,9 % | |
| | 50,5 % | |
| | 50,6 % | 0,21 |

Der Venturi-Injektor zeigt dabei eine sehr gute Reproduzierbarkeit.

Beispiel 3: Einsatz unterschiedlich geperlter Rußtypen

In dem folgenden Beispiel werden 4 unterschiedlich geperlte Rußtypen der Firma Degussa GmbH mit den in der Tabelle 5 aufgeführten Eigenschaften eingesetzt.

Tabelle 5:

| Rußtyp | 1<br>Printex Alpha | 2<br>Printex Alpha A | 3<br>Printex ES 34 | 4<br>Purex HS 25 |
|---|---|---|---|---|
| CTAB [m$^2$/g] | 77,4 | 83,7 | | 28,2 |
| BET [m$^2$/g] | 97,8 | 103,9 | | 30,6 |
| DBP [ml/100 g] | 97,8 | 99 | 74,6 | 123,5 |
| Q3,10 [$\mu$m] | 157 | 196 | 163 | 290 |
| Q3,50 [$\mu$m] | 335 | 579 | 375 | 849 |
| Q3,90 [$\mu$m] | 655 | 949 | 1494 | 1762 |
| Granulation | trocken | nass | öl | nass mit Granulierhilfsmittel |

15 g des jeweiligen Rußtyps werden über die Förderrinne in die Messstrecke des Laserbeugungsspektrometers gebracht und die Partikelgrößenverteilung der unbeanspruchten Granulatprobe bestimmt.
15 g des jeweiligen Rußtyps werden über die Förderrinne und den Venturi-Injektor in die Förderstrecke gebracht. Die Luftgeschwindigkeit im Förderrohr (Nenndurchmesser 44 mm) wird dabei auf 13 m/s eingestellt. Die Dosierleistung der Förderrinne wird so gewählt, dass sich eine Beladung von 27 g Ruß/kg Luft einstellt. Als Förderstrecke wird eine Schlaufe mit einem 360°-Bogen und anschließendem Krümmer gemäß Figur 2 eingesetzt. Im nachgeschalteten Laserbeugungsspektrometer werden aus den Partikelgrößenverteilungen die Massenanteile der beanspruchten Granulatprobe mit Partikelgrößen < 125 $\mu$m bestimmt. Der $\Delta$ Massenanteil < 125 $\mu$m ergibt sich aus der Differenz der Massenanteile der beanspruchten Probe und der unbeanspruchten Probe. Die Messwerte sind in Tabelle 6 aufgeführt.

Tabelle 6:

| Rußtyp | Massenanteil < 125 $\mu$m (beanspruchte Probe) | $\Delta$ Massenanteil < 125 $\mu$m |
|---|---|---|
| 1 | 78,7 % | 12,8 % |
| 2 | 65,7 % | 1,9 % |
| 3 | 46,4 % | 7,4 % |
| 4 | 30,0 % | 1,2 % |

Wie aus der Tabelle 6 ersichtlich ist, können mit Hilfe der beanspruchten Messtechnik unterschiedliche Granulationsverfahren differenziert nachgewiesen werden.

Beispiel 4: Charakterisierung von pyrogener Kieselsäure

Im folgenden Beispiel wird eine vorverdichtete pyrogene Kieselsäure Aerosil 200 der Firma Degussa GmbH mit den in Tabelle 7 genannten Eigenschaften eingesetzt.

Tabelle 7:

| Messgröße | Messwert | Bestimmungsmethode |
|-----------|----------|--------------------|
| BET | 200 m$^2$/g | DIN 66131/2 |
| Q3,10 | 615,4 $\mu$m | ISO 133322-2 |
| Q3,50 | 1521,2 $\mu$m | ISO 133322-2 |
| Q3,90 | 2848,7 $\mu$m | ISO 133322-2 |

10 g der beschriebenen Kieselsäure werden über die Förderrinne in die Messstrecke des Laserbeugungsspektrometers gebracht und die Partikelgrößenverteilung der unbeanspruchten Granulatprobe bestimmt.

10 g der beschriebenen Kieselsäure Granulate werden über die Förderrinne und den Venturi-Injektor in die Förderstrecke gebracht. Die Luftgeschwindigkeit im Förderrohr (Nenndurchmesser 44 mm) wird dabei zwischen 11 und 15 m/s eingestellt. Die Dosierleistung der Förderrinne wird so gewählt, dass sich eine Beladung von 27 g Kieselsäure/kg Luft einstellt. Als Förderstrecke wird eine Schlaufe mit einem 360°-Bogen und anschließendem Krümmer gemäß Figur 2 eingesetzt. Im nachgeschalteten Laserbeugungsspektrometer werden aus den Partikelgrößenverteilungen die Massenanteile der beanspruchten Granulatprobe mit Partikelgrößen < 125 $\mu$m bestimmt. Der $\Delta$ Massenanteil < 125 $\mu$m ergibt sich aus der Differenz der Massenanteile der beanspruchten Probe und der unbeanspruchten Probe. Dabei ergeben sich die Werte gemäß Tabelle 8. Die unbeanspruchte Probe hat einen Massenanteil < 125 $\mu$m von 0%.

Tabelle 8:

| Luftgeschwindigkeit | Massenanteil < 125 $\mu$m (beanspruchte Probe) | $\Delta$ Massenanteil < 125 $\mu$m |
|---------------------|-----------------------------------------------|-----------------------------------|
| 0 m/s | 0 % | 0 % |
| 11 m/s | 2,8 % | 2,8 % |
| 13 m/s | 4,8 % | 4,8 % |
| 15 m/s | 7,8 % | 7,8 % |

Wie aus dem beschriebenen Beispiel hervorgeht, lässt sich die Granulatzerstörung auch von vorverdichteter pyrogener Kieselsäuren bei unterschiedlichen Luftgeschwindigkeiten sehr gut charakterisieren.

**Patentansprüche**

1. Verfahren zur Bestimmung des Transportverhaltens bei pneumatischer Förderung von Granulaten indem man

(A) die Granulatprobe in eine Förderrinne aufgibt,
(B) die Granulatprobe nach der Förderrinne über einen Injektor in einen geregelten Luftstrom einbringt,
(C) die Granulatprobe eine Förderstrecke durchfließt und
(D) die Granulatprobe in einem Laserbeugungsspektrometer vermisst,

**dadurch gekennzeichnet, dass** man in Schritt (B) die Granulatprobe über einen Venturi-Injektor einbringt.

2. Vorrichtung zur Durchführung des Verfahrens nach Anspruch 1, enthaltend

• eine Förderrinne (1) zur Aufgabe von Granulaten in die Förderstrecke,
• eine Förderrinne (2) zur Aufgabe von unbeanspruchten Granulaten in das Laserbeugungsspektrometer,

• ein Luftstromregelventil (5),
• ein Venturi-Injektor (3),
• eine Förderstrecke (7) und
• ein Laserbeugungsspektrometer (4).

**Claims**

1. Method of determining the transport behaviour in the pneumatic transport of granular materials, in which

(A) the sample of granular material is introduced into a feed chute,
(B) the sample of granular material is, after the feed chute, introduced via an injector into a regulated stream of air,
(C) the sample of granular material flows through a transport section and
(D) the sample of granular material is measured in a laser light scattering spectrometer,

**characterized in that** in step (B) the sample of granular material is introduced via a Venturi injector.

2. Apparatus for carrying out the method according to Claim 1, comprising

• a feed chute (1) for introduction of granular materials into the transport section,
• a feed chute (2) for introduction of unstressed granular materials into the laser light scattering spectrometer,
• an air flow regulating valve (5),
• a Venturi injector (3),
• a transport section (7) and
• a laser light scattering spectrometer (4).

**Revendications**

1. Procédé pour déterminer le comportement de transport lors du transport pneumatique de granulés selon lequel :

(A) on transfère un échantillon de granulés dans une gouttière transporteuse,
(B) après la gouttière transporteuse on introduit l'échantillon de granulés dans un flux d'air réglé par l'intermédiaire d'un injecteur,
(C) on fait parcourir un chemin de transfert par l'échantillon de granulés, et
(D) on mesure l'échantillon de granulés dans un spectromètre à diffractométrie laser,

**caractérisé en ce que**
lors de l'étape (B) on introduit l'échantillon de granulés dans le courant d'air par l'intermédiaire d'injecteur à Venturi.

2. Dispositif permettant la mise en oeuvre du procédé conforme à la revendication 1, comprenant :

• une gouttière transporteuse (1) permettant l'introduction de granulés dans le chemin de transfert,
• une gouttière transporteuse (2) permettant l'introduction de granulés non sollicités dans le spectromètre à diffractométrie laser,
• une soupape de réglage d'un flux d'air (5),
• un injecteur à Venturi (3),
• un chemin de transfert (7), et
• un spectromètre à diffractométrie laser (4).

Figur 1    Venturi-Injektor

Figur 2    Aufbau der Laborföderapparatur

Figur 3    Ringspalt-Injektor

10

Figur 4    Düsen-Injektor mit Rohraufsatz

Figur 5    Düsen-Injektor

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0943913 A
- US 5816509 A
- EP 0178120 A
- DE 19521565
- WO 9845361 A
- DE 196113796
- WO 9842778 A

**In der Beschreibung aufgeführte Nicht-Patentliteratur**

- **PAHL, M.H.** Lagern, Fördern und Dosieren von Schüttgütern. Verlag TÜV, 1989, 175-176
- **FERCH, H.** Schriftenreihe Pigmente - Die Handhabung industriell erzeugter Ruße. *Degussa Schriftenreihe,* 1987, 74-75
- **KÄFERSTEIN P. ; MÖRL L. ; DALICHAU J. ; BEHNS W.** Zerfallsverhalten von Partikeln in Wirbelschichten. *Anlage zum Schlussbericht des AiF-Projektes,* 1999, 17-21